# EUROPEAN PATENT SPECIFICATION

(11) **EP 3 083 727 B1**
(45) Date of publication and mention of the grant of the patent: **12.01.2022**
(21) Application number: 14777100.0
(22) Date of filing: 29.09.2014
(51) Int. Cl.: C08F 214/06, C08F 214/00, C08F 220/18

(54) **PROCESS FOR THE PREPARATION OF POLYMERS BASED ON VINYL HALIDES**
VERFAHREN ZUR HERSTELLUNG VON POLYMEREN AUF BASIS VON VINYLHALOGENIDEN
PROCÉDÉ POUR LA PRÉPARATION DE POLYMÈRES À BASE D'HALOGÉNURES DE VINYLE

(30) Priority: 16.12.2013 EP 13382513
(43) Date of publication of application: 26.10.2016
(73) Proprietor: Ercros, S.A., 08014 Barcelona (ES)
(72) Inventor: PASCUAL FERNÁNDEZ, Belén, E-22400 Monzón (ES); ASUA GONZÁLEZ, José María, E-20018 San Sebastián (ES); CONDE GUTIÉRREZ, Ignacio, E-22400 Monzón (ES); BOIX BACHS, Miquel, E-43080 Tarragona (ES); PÉREZ GUERRA, Graciliano, E-43080 Tarragona (ES); BADILLO CHÁVEZ, Guillermo, E-43080 Tarragona (ES)
(74) Representative: ZBM Patents - Zea, Barlocci & Markvardsen
(86) International application number: PCT/EP2014/070805
(87) International publication number: WO 2015/090657

(56) References cited:
- WO-A1-2013/014158

## Description

The present invention relates to the field of polymer chemistry. In particular the invention relates to a process for the preparation of polymers from at least a vinyl halide monomer, such as vinyl chloride, and at least another polymerizable monomer whose polymer has a glass transition temperature lower than the poly(vinyl halide), by free radical polymerization in aqueous medium, and to the polymer obtained therefrom.

### BACKGROUND ART

Poly(vinyl halides), in particular poly(vinyl chloride) (PVC), are among the largest volume thermoplastics in the world due to its great versatility and its excellent price/performance ratio that make the PVC compounds to be used in rigid and in flexible applications

In last years, there is a growing demand and interest for flexible PVC compounds with rubbery and elastomeric properties without using liquid and external plasticizers and at a reasonable cost. The possibility of obtaining flexible materials made of PVC without using conventional plasticizers is extremely important for the industry, as this type of plasticizers, and more specifically phthalates, has important drawbacks mainly related to problems derived from its migration (toxicity, ageing behaviour of the finished good) and the increasing of its cost produced in recent years. Copolymerization of vinyl chloride with "soft" monomers (monomers that give polymers with a glass transition temperature, T_{g}, lower than that of poly(vinyl chloride)) is a way to avoid the use of plasticizers and the problems associated with them. Copolymerization with soft monomers allows reducing the T_{g} of the final copolymer, and increases the flexibility of the copolymer so allows to avoid the use of plasticizers.

Random copolymers of constant composition are expected to provide the maximum homogeneity between the vinyl chloride and soft monomers. When the soft monomer is an acrylate, because the reactivity ratios of the acrylates are substantially higher than those of the vinyl chloride, special strategies should be used to achieve a constant composition.

US 20090143547 discloses a process that involves the polymerization of a mixture of vinyl halides and acrylates that can be added stepwise or all at once in the presence of either a mixture of methacrylates or a preformed (meth)acrylate polymer, which can be added either stepwise or all in one time.

US 3884887 discloses a process to synthesize a uniform random copolymer of vinyl chloride and hydroxyalkyl acrylates that involves either the feeding of a mixture of vinyl chloride and hydroxyacrylate, or placing all the vinyl chloride (with some of the hydroxyacrylate) in the initial charge and feeding the rest of hydroxyacrylate during the polymerization.

EP 358181 and EP 358182 disclose processes in which all or part of both acrylate monomer and vinyl chloride are placed in the initial charge and the rest of the acrylate and vinyl chloride are added later.

WO 2013014158 discloses a process to synthesize random copolymers of vinyl halides and acrylate monomers by a reversible-deactivation radical polymerization. However, a long process is required and it involves the use of expensive reactants.

These processes led to copolymers with a poor thermal resistance, which limits their potential uses, as volatile products produced at high temperatures will result in the formation of bubbles in the final product. Besides, the slurry of copolymers obtained using these procedures are often too sticky, and hence they cannot be dried under the conditions and/or with the equipment that are currently used in the manufacture of PVC homopolymer.

V. Macho et al. ("Simultaneous statistical suspension copolymerization of vinyl chloride with butyl acrylate and grafting on poly(butyl acrylate)" J. Appl. Sci. 1998, vol. 68, pp. 649-656) discloses a process involving two different polymerization techniques. Firstly a latex of poly(butyl acrylate) is synthesized by emulsion polymerization, and then, the obtained latex is placed in a second reactor as initial charge and butyl acrylate and vinyl chloride are continuously added to the reactor at constant monomer ratio to carry out the polymerization process in suspension. The polymers synthesized following this procedure have some heterogeneity as shown by the presence of three T_{g}s and a relatively low thermal resistance.

Thus, there continues to be a need of a process which allows obtaining in an aqueous medium a polymer from a vinyl halide monomer and another monomer with a relatively high thermal resistance and improved mechanical properties, while having good handling and processing properties.

### SUMMARY OF THE INVENTION

Inventors have developed an improved process for the preparation of a new range of polymers from vinyl halide monomers (monomer A) and at least one soft monomer B by free radical polymerization in aqueous medium.

Advantageously, the process of the invention allows obtaining a range of polymers based on vinyl halide monomers, having improved thermal stability with regard to known polymers, in particular to the ones disclosed in V. Macho *et al. (ibid).* In addition, the polymers produced according the present invention have a higher homogeneity as measured by Dynamic Mechanical Analysis than those disclosed by Macho et al (*ibid.*)*.* These properties ease the processing of the final polymer while allowing obtaining a product with a higher lifetime. In addition to this and surprisingly, this range of polymers have good mechanical properties, such as good tensile properties, presenting higher tensile strength values and maintaining a similar elongation at break than random copolymers. These properties lead to an increase of the toughness of the products.

Besides, surprisingly, the obtained polymers including those with high amount of soft comonomer have good handling and processing properties, such as a lower stickiness and an improved drying behaviour with regard to known polymers of the same overall composition, being possible to reach higher temperatures in drying step. In addition, the performance of the products during storage is also improved.

The new procedure involves the addition in the initial charge of at least a 10 wt% of a monomer B, and, when the conversion of the monomer B reaches a certain value, adding the vinyl halide monomer at specific conditions.

Thus, an aspect of the invention is the provision of a process for the preparation of a polymer from at least one monomer A which is a vinyl halide monomer and at least one monomer B by free radical polymerization in aqueous medium, wherein the monomer B is a monomer whose polymer has a T_{g} lower than that of the polymer produced by polymerizing the at least one vinyl halide monomer, and the ratio of the at least one vinyl halide monomer A to the at least another monomer B in wt% in the polymer is from 99.7/0.3 to 40/60, particularly from 98/2 to 50/50, and more particularly from 97/3 to 55/45; the process comprising the following steps:
a) mixing water, at least one amphiphilic substance, from 10 to 100 wt%, particularly 50 to 100 wt%, of the total amount of the at least one monomer B, optionally a buffer, and optionally from 0.1 to 10 wt % of the at least one monomer A with respect to the at least one monomer B in step a), at an appropriate temperature to carry out the polymerization of monomer B,
   and adding an initiator in order to start polymerization and allowing the system to react until reaching a conversion from 10 to 80 mol%, or from 20 to 80 mol%, or from 30 to 60 mol%, or from 30 to 50 mol%, of monomer B,
b) adding from 20 to 100 wt%, particularly from 40 to 100 wt%, and more particularly from 60 to 100 wt%, of the remaining amount of monomer A to be added in the reaction, optionally, an additional amount of the amphiphilic substance, optionally, an additional amount of the initiator, optionally, a buffer; and the remaining amount of the at least one monomer B, allowing the mixture to react until the conversion of the monomers reaches a value higher than 20%, or higher than 50 wt%, or higher than 70 wt%, or higher than 80 wt%,
c) adding the remaining amount of the at least one monomer A, optionally, an additional amount of the amphiphilic substance, optionally, an additional amount of the initiator, and optionally an additional amount of the buffer, allowing the system to react until reaching a conversion higher than 70%, particularly higher than 80%.

The conversion refers to the total amount of monomers added to the reactor.

Another aspect of the invention relates to the polymer obtainable by the process of the invention.

The invention also concerns any article of manufacture made of the polymer of the invention.

The article can be manufactured by a process as defined above, the process comprising forming said article from a product obtainable by the process of the invention. The article can be formed by conventional methods known in the art, such as by extrusion.

### BRIEF DESCRIPTION OF THE DRAWINGS

Figure. 1. Depicts the DMTA diagrams carried out on polymers obtained by Comparative Example 2 and by Example 1.
Figure 2. Depicts the result of the TGAs carried out on polymers obtained by Comparative Example 2 and by Example1.
Figure 3. Depicts the release of HCI at 180°C of polymers obtained by Comparative Example 2 and by Example 1.
Figure 4. Depicts the results of static thermal stability of polymers of Example 1 and of Comparative Example 2. The samples were heated in in a Werner-Mathis oven at 180°C and withdrawn therefrom at regular intervals of 10 minutes until 110 minutes.
Figure 5 Shows the evolution of colour parameters (L*, a* and b*) of the sheets after the static thermal testing at 180°C in polymers obtained by Comparative Example 2 and by Example 1.

### DETAILED DESCRIPTION OF THE INVENTION

The term "monomer", as used herein, when related to their presence in a polymer refers to the monomer units present in the polymer once the polymerization reaction has been carried out. For instance, in the case of the polymer of the invention, it refers to monomer A and monomer B units present in the polymer.

As mentioned above, an aspect of the invention relates to a process for the preparation of a polymer from at least one vinyl halide monomer (monomer A) and at least a soft monomer B by free radical polymerization in aqueous medium under the specific reaction conditions mentioned above.

The obtained polymer is deprived of moieties of monomer B homopolymer, which have a mobility enough to give rise to an additional T_{g} lower than 10°C in the polymer. Therefore, the polymer obtained through the process of the invention lacks of a measurable T_{g} below 10°C as it does not have moieties of monomer B homopolymer.

In order to determine if the obtained polymer is deprived of the mentioned moieties, Dynamic Mechanical Thermal Analysis (DMTA) can be carried out in order to obtain the T_{g}s of the polymer. As an example, a Triton DMTA equipment can be used.

More particularly, no T_{g} between -20 °C and 10 °C appears when Dynamic Mechanical Thermal Analysis (DMTA) of the polymer of the invention is carried out. The evaluation conditions were "single cantilever bending" at a frequency of 1 Hz and a heating rate 4 °C/min in a temperature range from -50 °C to 120 °C. From this test temperature transitions (in particular, glass transition temperature T_{g}) were obtained.

As used herein, the term "soft monomer" stands for a monomer whose polymer has a glass transition temperature, T_{g}, lower than that of the polymer produced by polymerizing at least one vinyl halide monomer, particularly lower than that of poly(vinyl chloride).

The process of the invention is advantageous because it can be carried out in only one stage, which allows using a single reactor and reducing the time needed to obtain the final polymer. Additionally, the process allows obtaining polymers with an amount of monomer B in the polymers lower than 15%, particularly lower than 12%, more particularly lower than 10%.

When more than one monomer A is used in the process of the invention, the monomers can be equal or different in all the steps of the process where monomer A is added. Similarly, when more than one monomer B is used in the process of the invention, the monomers can be equal or different in all the steps of the process where monomer B is added. Particularly, when more than one monomer A is used, at least one of the monomers A is present in all the steps of the process where monomer A is added. Also particularly, when more than one monomer B is used, at least one of the monomers B is present in all the steps of the process where monomer B is added.

The ratio of the at least one vinyl halide monomer A to the at least another monomer B in wt% (A wt%/B wt%) in the final product is from 99.7/0.3 to 40/60, or from 98/2 to 50/50, or from 97/3 to 55/45.

Unlike other processes of the prior art, the process of the invention allows to obtain polymers with a low percentage of the at least one monomer B. Accordingly, in a particular embodiment, the ratio of the at least one vinyl halide monomer A to the at least another monomer B in wt% in the final product is from 99.7/0.3 to 85/15 or from 99.7/0.3 to 88/12 or from 99.7/0.3 to 90/10.

More particularly, when the ratio of the at least one vinyl halide monomer A to the at least another monomer B in wt% is from 97/3 to 90/10 the polymer has an unexpectedly high apparent density, which results in an increased productivity.

When the amount of polymer B in the final polymer is from 10-25 wt%, improved impact properties are obtained whereas the mechanical properties of the product are maintained, and so there is no need to incorporate impact modifiers to the polymer. Additionally, these polymers are characterized by having a high apparent density. Accordingly, in another particular embodiment, the ratio of the at least one vinyl halide monomer A to the at least another monomer B in wt% in the final product is from 90/10 to 75/25.

In another particular embodiment, the ratio of the at least one vinyl halide monomer A to the at least another monomer B in wt% in the final product is from 75/25 to 40/60. In such a case, there is no need to incorporate liquid plasticizers, namely, the polymer can be considered an auto-plasticized product.

The process of the invention is carried out by loading in the reactor water, a solution of at least a suitable amphiphilic substance and adding totally or partially at least one monomer B to the reactor. The amount of the at least one monomer B added at step a) is from 10 to 100 wt%, particularly from 50 to 100 wt%, of the total amount of monomer B. More particularly, the amount of the at least one monomer B added at this step is 100%.

Optionally, before the start of the polymerization of the at least one monomer B, a catalytic amount of at least one of the vinyl halide monomers forming the mixture of monomers A can be added to the reaction mixture in order to ease the polymerization reaction. The catalytic amount of monomer A will be such that no significant amount of random copolymer will be formed. By the expression "no significant amount of random copolymer will be formed" it is meant that the physicochemical properties of the polymer obtained by the polymerization of monomer B in the presence of the catalytic amount of the al least one monomer A will be practically indistinguishable from those of the polymer obtained by the polymerization of monomer B in the absence of monomer A.

Accordingly, the catalytic amount of monomer A will be from 0.1 to 10 wt % with respect to the monomer B in step a). The specific amount of monomer A used in this stage of the process will depend on the specific monomer B. As an instance, when butyl acrylate is used as monomer B, a catalytic amount of monomer A is added as well, particularly, an amount from 0.1 to 8 wt% with respect to monomer B in the reactor.

The temperature of the reactor can be adjusted to the desired value, particularly to a value from 20 to 120 °C, more particularly from 30 to 100 °C. At least one initiator can be injected either as a shot or semicontinuously in order to start polymerization. The reaction can be maintained at the adjusted temperature until reaching a conversion from 10 to 80 wt%, particularly from 20 to 80 wt%, or from 30 to 60 mol%, or from 30 to 50 mol%, of the amount of monomer B added at this stage (step a).

Methods to determine monomer conversion are known for those skilled in the art and include among others off-line gravimetry (JM Goldwasser and A Rudin, J. Polym. Sci. Polym. Chem. ED., 1982, Vol. 20, p. 1993) and on-line reaction calorimetry (A Urretabizkaia, et al. J. Polym. Sci. Part A: Polym. Chem., 1994; Vol. 32, p. 1761). As used herein, the term conversion stands for the quotient of polymer weight/(polymer weight + monomer weight).

The amount of suitable initiator or blend of different initiators added in step a) is from 0.001 to 2 mol%, particularly from 0.001 to 1.5 mol%, and more particularly from 0.001 to 1.0 mol% with respect to the total amount of monomer added in this step. The addition can be made continuously or in one or more injections, particularly in one or more injections.

Thereafter, at least one vinyl halide monomer (monomer A) is added and the temperature is adjusted to an appropriate value (step b).

By "appropriate temperature" it is meant the required temperature to carry out the polymerization of the monomer or monomers. The temperature is adjusted in the different steps of the process according to the reactivity and the amount of the initiator. The reactor can be maintained at the same temperature or use a temperature profile.

Particularly, in step b) the polymerization temperature is from 20-80°C, particularly from 25-80°C, and more particularly from 30-75°C.

The amount of the at least one monomer A added at this step is from 20 to 100 wt% particularly from 40 to 100 wt%, and more particularly from 60 to 100 wt%, of the remaining amount of monomer A to be added. In a particular embodiment, the amount of the at least one monomer A added at this step is 100 mol% of the remaining amount of monomer A to be added. This addition can be made continuously or in one or more injections, particularly in one or more injections.

Also in this step, optionally, an additional amount of the at least one appropriate amphiphilic substance can be added. The addition of the at least one amphiphilic substance can be made continuously or in one or more injections.

Also optionally, and independently of the possible addition of amphiphilic substances, an additional amount a suitable initiator or a blend of different initiators can be added. This amount is from 0.001 to 2 mol%, particularly from 0.001 to 1.5 mol%, and more particularly from 0.001 to 1.0 mol% with respect to the total amount of monomer added in this step. The addition can be made continuously or in one or more injections, particularly in one or more injections.

Additionally, independently of the possible addition of additional amounts of amphiphilic substances and/or initiators, an amount of buffer can be optionally added, particularly from 0.001 to 1 g/l of water, particularly from 0.01 to 1 g/l of water, and more particularly from 0.05 to 1 g/l of water.

Then, the reaction is conducted until the conversion of the monomers reaches a value higher than 20%, particularly higher than 50 wt%, more particularly higher than 70 wt% and even more preferable higher than 80 wt%.

In the case that not the whole amount of monomer B has been added in step a, the remaining amount of monomer B is added during step b). The addition can be made continuously or in one or more injections, particularly in one or more injections.

In a particular embodiment, 100% of the remaining amount of monomer A is added in step b) and the mixture is allowed to react until the conversion of the monomers reaches a value higher than higher than 70 wt%, or higher than 80 wt%.

In the case that not the whole amount of monomer A has been added in steps a) and b), the remaining amount is added in a further stage (step c)) and the reaction continued. The addition of monomer A can be made continuously or in one or more injections, particularly in one or more injections.

In step c) an additional amount of at least one appropriate amphiphilic substance can be added. The addition of the at least one amphiphilic substance can be made continuously or in one or more injections, particularly in one or more injections.

Also in step c) an additional amount of at least one appropriate initiator or blend of initiators can be optionally loaded into the reactor in order to further accelerate the polymerization of the remaining unreacted monomers and to obtain a product substantially free of unreacted monomer B. The amount of the initiator added during step c) is from 0.001 to 2 mol%, particularly from 0.001 to 1.5 mol%, and more particularly from 0.001 to 1.0 mol%, with respect to the total monomers. The addition can be made continuously or in one or more injections, particularly in one or more injections.

The term "substantially free of" stands for a presence of monomer B of less than 2000 ppm, particularly less than 1500 ppm, more particularly less than 1000 ppm and even more particularly less than 500 ppm.

The mentioned additional injections during the polymerization processes of step b) or step c) have the effect of speeding up the reaction rate, and so, the overall process time is reduced. There is no limitation concerning the moment when the injections during either step b) or step c) are carried out, or on the number of injections.

In either step b) or in step c) an additional amount of water can also be loaded into the reactor the addition can be made continuously or in one or more injections.

Optionally, a buffer can be added in step c), particularly from 0.001 to 1 g/l of water, particularly from 0.01 to 1 g/l of water, and more particularly from 0.05 to 1 g/l of water.

Particularly, the process of the invention is carried out in oxygen free atmosphere. The oxygen of the reactor can be removed before starting the polymerization reaction of step a) by using a purge with an inert gas such as of nitrogen or argon, by vacuum or by a combination of inert gas and vacuum.

Step c) can be carried out at temperatures from 20-80°C, particularly from 25-80°C, and more particularly from 30-75°C. Particularly, steps b) and c) can be carried out at the same temperature.

The composition and the type of the monomers in the final product will be chosen at will in the light of the intended final use, as it is apparent to those skilled in the art.

The reaction can be carried out in conventional reactors. As an instance, for the reaction of vinyl halides and other monomers in aqueous medium a stirred tank reactor with or without reflux condenser can be used.

The initiator added in steps a) b) and c) is selected from the group consisting of thermal and redox initiators. The radical initiator can be used without any limitation regarding their water solubility. Suitable thermal initiators are well known in the art and include, but are not limited to, inorganic peroxides, such as ammonium peroxodisulfate, sodium peroxodisulfate, potassium peroxodisulfate, and hydrogen peroxide; organic peroxides, including percarbonates such as di(2-ethylhexyl) peroxydicarbonate, 1,1,3,3-tetramethylbutyl 1.peroxyneodecanoate diacyl peroxides such as dibenzoyl peroxide, alkyl peroxides such as tert-butyl hydroperoxide, benzoil peroxide, lauroyl peroxide, cumyl hydroperoxide, dialkyl peroxides such as di-tert-butyl hydroperoxide, diisobutyryl peroxide and acyl alkyl peroxides such as tert-butyl peroxybenzoate; and azo initiators, such as 2,2'-azobis(2-methylbutyronitrile), 2,2'-azobis(2-methylpropio-nitrile), 2,2'-azobisisobutyronitrile and the like. Examples of redox initiators include, but are not limited to, inorganic peroxides paired with a suitable reducing agent such as sulfites, metabisulfites, sodium dithionite, sodium thiosulfate, sodium formaldehydesulphoxylate, a mixture of disodium salt of 2-hydroxy-2-sulphinoacid, of sodium sulphite and of disodium salt of 2-hydroxy-2-sulphoacid, or a mixture of disodium salt of hydroxysulphinoacetic acid and of disodium salt of hydroxysulphoacetic acid; and tert-butyl hydroperoxide and hydrogen peroxide paired with ascorbic acid, a mixture of disodium salt of 2-hydroxy-2-sulphinoacid, of sodium sulphite and of disodium salt of 2-hydroxy-2-sulphoacid, or a mixture of disodium salt of hydroxysulphinoacetic acid and of disodium salt of hydroxysulphoacetic acid. Water soluble initiators are preferred.

The polymerization process in aqueous medium of this invention can be carried out in suspension, emulsion or microsuspension. Accordingly, the aqueous phase contains at least an amphiphilic substance which helps to stabilize the dispersion. The selection of the amphiphilic substance will depend on the kind of polymerization process. Both suspension agents and surfactants (emulsifiers) can be used.

Suitable suspending agents include, but are not limited to, partially hydrolysed vinyl alcohol polymers, cellulose ethers or hydroxides, gelatine, starch, vinyl acetate-maleic anhydride copolymers, ethylene-vinyl acetate copolymers, alginates, esters of fatty acids with glycerol, ethylene glycol or pentaerythritol, and sorbitan monolaurate, or mixtures thereof. Preferred suspending agents are poly(vinyl alcohol) with a degree of hydrolysis of 70-90 mol% and a viscosity of 5-60 mPa·s in a 4% (w/w) aqueous solution, hydroxypropyl methylcellulose with a 23-30 wt% of groups methoxy, a 6-10 wt% hydroxypropyl groups and a viscosity of 12-120 mPa·s in a 2% (w/w) aqueous solution, or mixtures thereof. The optimum amount of suspending agent depends on its nature, the desired particle size, the design of the reactor and the stirrer, the water/monomer proportion and the stirring speed, and can be chosen by one skilled in the art.

The amount of suspending agent that can be added in each step with respect to the total amount of monomers in each step is from 100 to 20000 ppm, particularly from 200 to 15000 ppm, more particularly from 300 to 10000 ppm.

Suitable emulsifiers include, but are not limited to, those selected from the group consisting of anionic emulsifiers, cationic emulsifiers, non-ionic emulsifiers, and mixtures thereof. Anionic and non-ionic emulsifiers are preferred. Emulsifiers used in the present invention may contain one or more olefinicaly unsaturated group (reactive emulsifiers). Polymeric or oligomeric emulsifiers can also be used provided they form micelles.

Examples of anionic emulsifiers include, but are not limited to, alkyl sulfates such as sodium lauryl sulfate, alkyl-aryl sulfonates such as sodium dodecylbenzene sulfonate, polyoxyethylene alkyl ether sulfates, polyoxyethylene alkylphenyl ether sulfates, and diphenyl sulfonate derivatives.

Suitable nonionic emulsifiers include, but are not limited to, polyoxyethylene alkyl ethers and polyoxyethylene alkylphenyl ethers.

Suitable reactive emulsifiers include, but are not limited to, polyoxyethylene alkylphenyl ethers; polyoxyethylene alkylphenyl ether ammonium sulfates; sodium allyloxy hydroxypropyl sulphonate and allylsulphosuccinate derivatives.

Suitable polymeric emulsifiers include, but are not limited to, copolymers of acrylic monomers.

These emulsifiers may be used alone or in combination of two or more thereof. The amount of the emulsifier that can be added in each step is, for example, from 0.2 to 10 parts by weight, particularly from 0.5 to 5 parts by weight, per 100 parts by weight with respect to the total amount of monomers in each step.

A buffer may be used in the polymerization process in order to maintain the pH of the reaction. Typical buffers can include alkaline salts of inorganic and organic acids, able to keep the pH of water solutions in the range 8-10. These buffers include, but are not limited to, sodium bicarbonate (NaHCO₃), sodium dihydrogen phosphate (NaH₂PO₄) disodium phosphate (Na₂HPO₄), sodium acetate (CH₃COONa), or the potassium or ammonium salts thereof. The reaction mixture will optionally contain from 0.001 to 1 g/l of water, particularly from 0.01 to 1 g/l of water, and more particularly from 0.05 to 1 g/l of water of a buffer.

Suitable monomers B intervening in the polymerization reaction include, but are not limited to, acrylates and other monomers such as vinyl benzoate, isobutylene, dialkyl maleate, di-alkyl fumarate, and vinyl acetate. Particularly, the monomer B is an acrylate, namely, an ester of acrylic acid. Examples of acrylates include, but are not limited to, methyl, ethyl, 2-methoxyethyl, 2-ethoxyethyl, isopropyl, n-butyl, iso-butyl, sec-butyl, tert-butyl, hexyl, 2-ethylhexyl, octyl, iso-octyl lauryl, isodecyl, octadecyl, dodecyl, 4-butyl cyclohexyl, hexadecyl, benzyl, tetrahydrofurfuryl, diethylene glycol diethyl ether, and methoxy (polyethylene glycol) acrylate, and acrylates with a hydrophilic character such as 2-hydroxyethyl, hydroxypropyl, and 4-hydroxybutyl acrylate, and hydroxyacrylate. The content of monomer B in the product can be from 0.3 to 60 wt% based on the weight of the vinyl halides. Particularly, the content of monomer B is from 2 to 50 wt%, more particularly from 3 to 45 wt%, based on the weight of the vinyl halides in the product. More particularly, the monomer B is not a methacrylate.

Depending on the selected monomer B, the properties of the obtained polymer can be tuned to meet the requirements for different applications by adjusting the ratio between monomers B and A in the overall formulation.

Suitable vinyl halide monomers include, but are not limited to, vinyl chloride and its structurally related derivatives, including vinylidene chloride and 2-chloropropene. In any of the embodiments of the invention, one vinyl halide monomer can be vinyl chloride. Particularly, the vinyl halide monomer (monomer A) used in the process as defined above is from 50% to 100% vinyl chloride.

Once the reaction is finished, the unreacted vinyl halide can be recovered by depressurizing the reactor and vacuum distillation, the slurry with the powder of the resin dispersed in water can be stripped, and the product can be isolated by filtration or centrifugation of the resulting product, followed by washing with water and drying.

Depending on the specific monomers and their content in the final product, rigid poly(vinyl halide) materials with modified properties as well as self-plasticized poly(vinyl halide) with different degrees of flexibility can be obtained. The appropriate monomers and their content for the aimed specific application of the final product can be easily determined by a skilled person in the art by routine tests and with the help of the teachings of the examples given in this description.

As mentioned above, the polymerization process in aqueous medium of this invention can be carried out in suspension, emulsion or microsuspension. The selection of the type of polymerization can be made according to the intended applications of the products obtained. As an instance, the polymerization process of the invention can be carried out in aqueous suspension.

When the polymerization process is in suspension, it can be carried out in deionised water, being the weight to weight ratio of water with respect to total amount total monomers from 0.8 to 4 w/w, particularly from 1 to 3 w/w.

As commented above, an inherent result of the process of the invention is that it provides a new range of products from at least one vinyl halide monomer and at least one another monomer B with improved mechanical properties, and a good thermal stability.

These properties make the product of the invention particularly suitable to use as a raw material in the production of different articles of manufacture for multiple applications.

Such properties indicate that the product obtainable by the process of the invention is chemically/structurally different to the vinyl halide products of the prior art.

The products of the invention can be formulated in a similar way to commercial poly(vinyl halide) resins, adding suitable additives for specific applications and using the same processing equipment, thus obtaining a variety of poly(vinyl halide) compounds with different properties suitable for different applications. The applications of the products obtained by the process of the invention are not at all limited, and include all types of rigid or flexible articles manufactured by injection, extrusion, calendaring, extrusion blow moulding, thermoforming, vacuum moulding, and so on, with a large number of applications.

### EXAMPLES

In examples below, the products obtained using the procedure described in this invention were characterized using the following analytical techniques:
The apparent density was analysed according to the procedure described in the UN-EN ISO 60 standard.

The particle size distribution was determined by the sieve method based on the UNE-EN ISO 4610 standard.

The residual content of residual monomers was quantified using a head space gas chromatography technique in a AGILENT 680 GC chromatograph using the method described in the UNE-EN ISO 6401 standard.

The percentage of monomers in the polymer and the percentage of residual acrylate were calculated from the spectra of 1H Nuclear Magnetic Resonance (NMR) obtained in a Brucker 500 MHz equipment using deuterated chloroform (CDCl₃) and deuterated tetrahydrofuran (THF-D₈) as solvents.

The molecular weight distribution expressed as Mn (number average molecular weight), Mw (weight averaged molecular weight) and the Mn/Mw=PI (polydispersity index) were measured by Gel Permeation Chromatography (GPC). The chromatograph used from Waters, Model 717 Autosampler, has two detectors, one of refractive index, Waters 2410, and other UV absorption, Waters 2487. The analysis was conducted at 35° C using tetrahydrofuran (THF) as eluent and the results are based on polystyrene (PS) standards.

The thermal stability was evaluated using the procedure described in the ISO 182-3: based on the detection of the hydrogen chloride and any acidic products evolved at 180°C. The equipment used was a 763 PVC Thermomat from Metrohm.

The thermal stability of the products was analyzed using a thermogravimetric analysis (TGA). This test gives information of the steps of the degradation process, the temperatures at which each degradation process starts and finishes and the type of products formed in each step. A Thermobalance High Resolution TA Instruments Q500 model TG incorporating a spectrophotometer Fourier Transform Infrared (FTIR) Nicolet model 6700 was used. The tests were performed on samples in powder form under a nitrogen flow of 90 cm³/min and a constant heating rate of 10 °C/min, from 40 °C to 700 °C.

Additionally the products were also characterized using pressed samples prepared by adding to the products 2 phr of a Ca/Zn stabilizer and 3 phr of epoxidized soy bean oil, wherein "phr" is an abbreviation for "parts per hundred parts of resin". Formulations were homogenized in a two-roll mill at 160 °C and pressed at the same temperature using the mould to obtain the samples appropriated for each test.

The thermal behaviour of products were evaluated using a Dynamic Mechanical Thermal Analysis (DMTA) in a Triton DMA equipment under conditions of "single cantilever bending" at a frequency of 1 Hz and a heating rate 4 ° C/min in a temperature range from -50 °C to 120 °C. From this test, temperature transitions (glass temperature, T_{g}) were obtained.

The static thermal stability at 180°C was evaluated from sheets obtained in a two roll mill in a Werner-Mathis Thermotester oven during 110 minutes. The samples were withdrawn from the oven at regular intervals of 10 minutes. The evolution of colour parameters (L*, a* and b*) was determined using a Spectrophotometer CM-3610d from Minolta. The parameter L* is a measure of the lightness and is 0 for black and 100 for white. Parameters a* and b* are measures of the chromaticity, a* parameter refers to red in the positive direction and green in the negative direction; b* parameter refers to yellow in the positive direction and blue in the negative direction.

The Shore A and D hardness was determined using the indentation method by means of a durometer as is described in the UNE-EN ISO 868 standard.

The density was evaluated according to the UNE-EN ISO 1183-1.

Tensile properties were determined in an INSTRON 4301 according to the UNE-EN ISO 527 standard.

The Izod Impact strength properties were evaluated according UNE-EN ISO 180 using notched samples.

The products obtained using this procedure were also compared with the copolymer obtained as it described in comparative examples 2 and 3.

### COMPARATIVE EXAMPLE 1

Formulations with a conventional PVC resin (k value 70) and different amounts of plasticiser, 20, 35 and 50 phr of di(2-ethylhexyl)phthalate (DEHP), were prepared as references. These formulations, hereinafter called "conventional formulations", had the properties included in the following table.

| **COMPONENTS** | **Formulation 1** | **Formulation 2** | **Formulation 3** |
|---|---|---|---|
| PVC resin K value 70 | 100 | 100 | 100 |
| DEHP | 20 | 35 | 50 |
| Estabiliser | 0,7 | 0,7 | 0,7 |
| ESBO | 3 | 3 | 3 |

| **PROPERTIES** | | | |
|---|---|---|---|
| Shore A / D Hardness | 93 / 68 | 85 / 38 | 74 / 30 |
| Tensiles strength (Kg/cm2) | 539 | 200 | 205 |
| Elongation at break (%) | 241 | 229 | 314 |

### COMPARATIVE EXAMPLE 2

The procedure described by V. Macho et al. (*ibid.*) comprises two steps:

### 2.1. Preparation of poly(butyl acrylate) (PBA) dispersion

In a reactor of 1L capacity 378 g of deionised water were added, and 1.85 g of the emulsifier E-30 dissolved in 20 g of water was transferred into the reactor and stirred under N₂. After 15 minutes, 5g of BA was introduced and the mixture was agitated for another 15 minutes at 200 rpm.

After removing air, temperature was increased to 75 °C and 0.78 g of the initiator (K₂S₂O₈) was added in one shot to the reaction mixture. Then, during 2 hours 190 g of BA was gradually added to the stirred mixture and the polymerization was maintained for and additional hour at 75 °C. The product was cooled, isolated and weight.

The dispersion of PBA obtained consists on the fine particles with an average particle size of 73 nm.

### 2.2. Procedure for obtaining VCM and BA statistical and grafted copolymer

In a reactor of 7.5 L, equipped with a stirrer, cooling/heating jacket, injection pipette, load pump, dosing pump, and a computerized control system 1500 g of deionised water, 600 g of the dispersion of PBA, 439 g of water solution of methyl-hydroxy-propyl cellulose (2.1 wt%), 0.5 g of EHP W60, 3.84 g of dilauryl peroxide and 150 g of a water solution of calcium formiate (10 wt%) were added at 25 °C and the mixture was slowly stirred (150rpm).

The air from the reactor was removed and the temperature was increased to 59 °C. When this temperature was reached a continuous feed of VCM (1500 g) and BA (300 g) in which 2.1 g of dilauryl peroxide were dissolved was started. The reactor was fed during 3.5 hours and the copolymerization was continued at the same temperature until the pressure dropped by 0.2 MPa. The reacted mixture was cooled and the non-converted VCM was recovered. The suspension was filtered, washed three times with water and dried at 50 °C and 1451 g of copolymer was obtained.

The apparent density was 0.597 g/cm3 and the average particle size was 340 microns. The content of polybutyl acrylate in the product determined by ¹H NMR was 28 wt%. The product had three T_{g}s, one at -1 °C, the second at 42 °C and third one at 81°C, determined by DMTA, a molecular weight distribution of Mn = 82.800, Mw = 221.800 and a polydispersity of 2.7 determined by GPC.

The obtained product had a density of 1.26 g/cm³, Shore hardness A/D of 94/60, a tensile strength of 243 kgf/cm² and an elongation at break of 218%.

### COMPARATIVE EXAMPLE 3

In a reactor with a capacity of 7.5 L, equipped with a stirrer, cooling/heating jacket, injection pipette, load pump, dosing pump, and a computerized control system, 3500 g of deionized water, 198 g of a 6.0 wt% a solution of a polyvinyl alcohol with a hydrolysis degree of 72.5% in deionized water, 0.72 g of sodium bicarbonate and 1.55 g of iodoform were loaded.

Once the reactor was closed and the stirrer was connected at 100 rpm, a purge was carried out with nitrogen and subsequently vacuum was applied till 0.1 bar during 5 min. This operation was repeated twice, and finally vacuum was applied till 0.1 bar for another 5 min. Afterwards, the stirrer speed was increased to 450 rpm and 250 g of butylacrylate were loaded and the suspension was heated-up. When 35°C were reached a solution of 4.79 g of sodium dithionite (85% purity) in 50 ml of deionized water was injected to the reactor. The reaction was maintained for 45 minutes, which according to previous calorimetric studies carried out in a calorimetric reactor was enough to reach a conversion higher than 90 mol%

After this time, 1000 g of vinyl chloride were loaded from a pressured bottle and the reaction temperature was increased to 42°C. When this temperature was reached, a 50 ml aqueous solution of 0.72 g of sodium bicarbonate, 0.23 g of cetyltrimethylammonium bromide and 1.6 g sodium dithionite (85% purity) were injected into the reactor.

The reaction was kept under the same conditions during 6 hours and, after this time; the unreacted vinyl chloride was removed by depressurizing the reactor. Then, the obtained suspension was separated by filtration, washed three times with deionized water, and dried with air at 60 °C on a fluidized bed dryer.

This yielded 1021 g of a copolymer with 26 % of butyl acrylate units, a Mn = 98300 and Mw/Mn = 2.40. The product obtained using this procedure and type of initiator (LRP) has two T_{g}s; the first one appeared at 84°C and the second one at -7C. In this case, the material obtained in this example had a tensile strength of 149 kgf/cm² and an elongation at break of 39%.

### COMPARATIVE EXAMPLE 4

In a reactor with a capacity of 7.5 L, equipped with a stirrer, cooling/heating jacket, injection pipette, load pump, dosing pump, and a computerized control system, 3077 g of deionized water, 435 g of a 2.73 wt% aqueous solution of a polyvinyl alcohol with a hydrolysis degree of 72.5%, 0.72 g of sodium bicarbonate, and 1.55 g of iodoform were loaded,

Once the reactor was closed and the stirrer was connected at 100 rpm, a purge was carried out with nitrogen and subsequently vacuum was applied till 0.1 bar during 5 min. This operation was repeated twice, and finally vacuum was applied till 0.1 bar for another 5 min.

Afterwards, the stirrer speed was increased to 450 rpm and 250 g of butylacrylate were loaded and the suspension was heated-up. When 35 °C were reached a solution of 4.79 g of sodium dithionite (85% purity) in 50 ml of deionized water was injected to the reactor.

Four different polymerizations were carried out varying the first reaction time, carrying out four different reactions with 5, 10, 20 and 45 minutes, in order to verify the effect of using lower reaction time for the first step of polymerization, as it is done in the procedure of this invention.

The second step of reaction in these four polymerizations was carried out as it is described in comparative example 3 loading after each time, 1000 g of vinyl chloride from a pressured bottle and the reaction temperature was increased to 42°C. When this temperature was reached, a 50 ml aqueous solution of 0.72 g of sodium bicarbonate, 0.23 g of cetyltrimethylammonium bromide and 1.6 g sodium dithionite (85% purity) were injected in the reactor.

The reactions were kept under the same conditions during 6 hours and, after this time; the unreacted vinyl chloride was removed by depressurizing the reactor. Then, the obtained suspension was separated by filtration, washed three times with deionized water, and dried with air at 60 °C on a fluidized bed dryer.

The four polymers obtained with 5, 10, 20 and 45 min for the first reaction have respectively 27, 28, 30 and 29 wt % of polybutyl acrylate determined by ¹H NMR. The molecular weight distributions were Mn = 99100, 107000, 103600, 112800, Mw= 241300, 247800, 243000, 243700 and polidispersity indexes of 2.4, 2.3, 2.3, 2.2. The four products have two Tgs each, the first one at 80, 82, 82, 82, °C and the second one at -19°C, -14, -17, -20°C, respectively. The polymers had a Shore A/D hardness of 95/54, 97/59, 96/56, and 97/56, a very poor tensile strength of 95, 135, 113, 103 kfg/cm², and very low elongation at break 20, 21, 39, 11 %, respectively.

### COMPARATIVE EXAMPLE 5

In a reactor of 7.5 L, equipped with a stirrer, cooling/heating jacket, injection pipette, load pump, dosing pump, and a computerized control system, 3500 g of deionized water, 152 g of a 5.97 wt% aqueous solution of a polyvinyl alcohol with a hydrolysis degree of 72.5%, 0.36 g of sodium bicarbonate, 4.00 of a 60 wt% emulsion of di-(2-ethyl-hexyl) peroxydicarbonate, and 46 g of butyl acrylate were loaded.

Once stirring was connected, and the air on the reactor evacuated, and while heating in order to reach a temperature of 60 °C, 1375 g of vinyl chloride were loaded.

Feeding of the rest of acrylate was initiated immediately. The feeding was carried out during 240 minutes at a decreasing flow rate, so that after 24 minutes a total of 0.72 mol of butyl acrylate were added, after 60 min 1.91 mol, after 126 minutes 3.25 mol, and after 240 minutes 4.5 mol. At this moment, the acrylate feed was stopped and the un-reacted vinyl chloride was removed by depressurizing the reactor. Then, the obtained suspension was separated by filtration, washed three times with deionized water, and dried with air at 60 °C on a fluidized bed dryer. A conversion of 82% was obtained.

The apparent density was 0.370 g/cm³ and the average particle size was 252 microns.

The polymer has a 27 wt % of polybutyl acrylate determined by ¹H NMR. The molecular weight distributions were Mn = 73800, Mw= 183600 and a polidispersity index of 2.5 and it had a unique T_{g} = 40 °C.

The compound obtained had a specific weight of 1.24 g/cm³, Shore A /D hardness of 95 / 56, a tensile strength of 229 kfg/cm² and 327% of elongation at break.

### EXAMPLE 1

In the reactor of 7.5 litre capacity described in the comparative example 2, 3400 ml of deionised water, 80 g of a 5.75 wt% solution in deionized water of a mixture of suspending agents consisting on two types of polyvinyl alcohol with 80 and 88 % hydrolysis degree and hydroxypropyl methylcellulose, 0.231 g of sodium bicarbonate and 462.5 g of butyl acrylate were loaded.

Once the reactor was closed and the stirrer was connected at 150 rpm, vacuum was applied till removing the oxygen present in the reaction medium. Then the stirring was increased until 300 rpm and the reaction mixture was heated, and when a temperature of 37.8 °C was reached 1.62 g of a 60 wt% emulsion of di-(2-ethyl-hexyl) peroxydicarbonate and 0.325 gr of a 50 wt% emulsion of 1,1,3,3 tetra-methyl butyl peroxyneodecanoate were injected into the reactor.

The reaction was kept under these conditions until a 35% of conversion was achieved and then 1850 g of vinyl chloride monomer were loaded. When loading was finished, the reaction medium was heated until reaching a temperature of 55.7 °C, which was kept during the rest of the reaction.

The reaction was finished when the pressure of the reactor drops to 0.5 bar and the un-reacted vinyl chloride was removed by depressurizing the reactor. Then, the obtained suspension was separated by filtration, washed three times with deionized water, and dried with air on a fluidized bed dryer. The product was isolated, resulting in a conversion of 81%.

The apparent density was 0.700 g/cm³, the average particle size was 219 microns and the residual acrylate content determined by ¹H NMR was 224 ppm.

The content of polybutyl acrylate in the product determined by ¹H NMR was 25 wt%. The product had two T_{g}s, one at 40°C and another one at 82°C, determined by DMTA, a molecular weight distribution of Mn = 108.100, Mw = 239.600 and a polydispersity of 2.2 determined by GPC.

The obtained product had a density of 1.24 g/cm³, a Shore hardness A/D of 97/62, a tensile strength of 319 kgf/cm², and an elongation at break of 270%.

### EXAMPLE 2

In the reactor of 7.5 litre capacity described in previous examples, 3700 ml of deionized water, 18.9 g of a 5.5 wt% solution of a polyvinyl alcohol with a hydrolysis degree of 72.5% in deionized water and 120g of a 6.1 wt% solution of a polyvinyl alcohol with a hydrolysis degree of 80% in deionized water, 0.384 g of sodium bicarbonate and 613 g of butyl acrylate were loaded.

Once the reactor was closed and the stirrer was connected at 150 rpm, vacuum was applied till removing the oxygen present in the reaction medium. Then the stirring was increased until 300 rpm and the reaction mixture was heated and when a temperature of 42 °C was reached, 1,52 g of a 60 wt% emulsion of di-(2-ethyl-hexyl) peroxydicarbonate were loaded in the reactor.

The reaction was kept under these conditions until a 44% of conversion was achieved and then 1463 g of vinyl chloride monomer were loaded. When loading was finished, the reaction medium was heated until reaching a temperature of 60.5 °C, which was kept during the rest of the reaction.

The reaction was finished when the pressure of the reactor drops to 1.9 bar and the unreacted vinyl chloride was removed by depressurizing the reactor. Then, the obtained suspension was separated by filtration, washed three times with deionized water, and dried with air on a fluidized bed dryer. The product was isolated, resulting in a conversion of 71%.

The apparent density was 0.425 g/cm³, the average particle size was 313 microns and the residual acrylate content determined by ¹H NMR was 200 ppm.

The content of polybutyl acrylate in the product determined by ¹H NMR was 38 wt%. The product had two T_{g}s, one at 25°C and another one at 79°C, determined by DMTA, a molecular weight distribution of Mn = 103.300, Mw = 326.200 and a polydispersity of 3.2 determined by GPC.

The obtained product had a density of 1.23 g/cm³, Shore hardness A /D of 71/23, a tensile strength of 81 kgf/cm² and an elongation at break of 350%.

### EXAMPLE 3

The reactor of 7.5 litre capacity described in previous examples were loaded 3350 mL of deionised water, 123,7 g of a 5.6 wt% solution in deionized water of a mixture of suspending agents consisting on two types of polyvinyl alcohol with 80 and 88 % hydrolysis degree and hydroxypropyl methylcellulose, 0.231 g of sodium bicarbonate and 418 g of 2-ethyl-hexyl acrylate.

Once the reactor was closed and the stirrer was connected at 150 rpm, vacuum was applied till removing the oxygen present in the reaction medium. Then the stirring was increased until 300 rpm and the reaction mixture was heated, and when a temperature of 37.8 °C was reached, 2,21 g of a 60 wt% emulsion of di-(2-ethyl-hexyl) peroxydicarbonate and 0,24 gr of a 50 wt% emulsion of 1,1,3,3 tetra-methylbutyl peroxynoedecanoate were loaded in the reactor.

The reaction was kept under these conditions until a 80 % of conversion was achieved and at this moment 1900 g of vinyl chloride monomer were loaded. Then, the reaction medium was heated until a temperature of 55.7 °C was reached, which was kept constant during the rest of the reaction.

When the reaction was finished the pressure of the reactor drops to 4.0 bar and the un-reacted vinyl chloride was removed by depressurizing the reactor. Then, the obtained suspension was separated by filtration, washed three times with deionized water, and dried with air on a fluidized bed dryer obtaining a conversion of 84%

The apparent density was 0.750 g/cm³, the average particle size was 177 microns and the residual acrylate content was not detectable by ¹H NMR.

The content of polyethylhexyl acrylate determined by ¹H NMR was 19 wt%. The product had two T_{g}s, one at 24 °C and another one at 78°C determined by DMTA, a molecular weight of Mn = 108.000, Mw = 228.000 and a polydispersity of 2.1 determined by GPC.

The product obtained had a density of 1.27 g/cm³, a Shore A / D hardness of 96 / 66, a tensile strength of 229 kgf/cm², and an elongation at break of 137%. The Izod impact strength was 103 kg.cm/cm².

### EXAMPLE 4

In the same reactor of 7.5 litre capacity described in previous examples were loaded 3775 ml of deionized water, 71.1 g of a 5.8 wt% solution of a polyvinyl alcohol with a hydrolysis degree of 80% in deionized water and 632.5 g of butyl acrylate

Once the reactor was closed and the stirrer was connected at 150 rpm, vacuum was applied till removing the oxygen present in the reaction medium. Then the stirring was increased until 300 rpm and the reaction mixture was heated, and when the temperature of 60 °C was reached, 0.14 g of a 60 wt% emulsion of di-(2-ethyl-hexyl) peroxydicarbonate was loaded in the reactor.

The reaction was kept under these conditions until a 45% of conversion was achieved. At this moment 1442 g of vinyl chloride monomer were loaded and immediately after 2.11 g of a 60 wt% emulsion of di-(2-ethyl-hexyl) peroxydicarbonate was injected in the reactor.

The reaction was kept under these conditions during the rest of the reaction that was terminated when the reactor pressure dropped to a value of 4.2 bars. Then, the unreacted vinyl chloride was removed by depressurizing the reactor and the obtained suspension was separated by filtration, washed three times with deionized water, and dried with air on a fluidized bed dryer obtaining a conversion of 76%.

The apparent density was 0.573 g/cm³ the average particle size was 252 microns and the residual acrylate content determined by ¹H NMR was 386 ppm.

The content of polybutyl acrylate determined by ¹H NMR was 33 wt%. The product had two T_{g}s, one at 34 °C and another one at 79°C, determined by DMTA, a molecular weight of Mn = 82.300, Mw = 275.900 and a polydispersity of 3.3 determined by GPC.

The obtained product had a density of 1.25 g/cm³, a Shore hardness A/D of 88/37, a tensile strength of 202 kgf/cm², and an elongation at break of 317%.

### EXAMPLE 5

In the same reactor of 7.5 litre capacity described in previous examples, 2200 mL of deionized water, 123.1 g a 5.66 wt% solution in deionized water of a mixture of suspending agents consisting on two types of polyvinyl alcohol with 80 and 88 % hydrolysis degree and hydroxypropyl methylcellulose, 0.232 g of sodium bicarbonate and 347.5 g of butyl acrylate were loaded.

Once the reactor was closed and the stirrer was connected at 150 rpm, vacuum was applied till removing the oxygen present in the reaction medium. Then the stirring was increased until 300 rpm and the reaction mixture was heated, and when a temperature of 37.8 °C was reached, 2,215 g of a 60 wt% emulsion of di-(2-ethyl-hexyl) peroxydicarbonate and 0,243 gr of a 50 wt% emulsion of 1,1,3,3 tetra-methyl butyl peroxyneodecanoate were loaded in the reactor.

The reaction was kept under these conditions until a 55 % of conversion was achieved. At this moment 1150 ml of deionized water were injected into the reactor and vacuum was applied till removing the oxygen present in the reaction medium. After this 1975 g of vinyl chloride monomer were loaded, the reaction medium was heated until reaching a temperature of 55.7 °C, which was kept during the rest of the reaction.

The reaction was terminated when a reactor pressure drop to a value of 4.0 bars and the un-reacted vinyl chloride was removed by depressurizing the reactor. Then, the obtained suspension was separated by filtration, washed three times with deionized water, and dried with air on a fluidized bed dryer obtaining a conversion of 83%.

The apparent density was 0.437 g/cm³, the average particle size was 366 microns and the residual acrylate content was not detectable by ¹H NMR.

The content of polybutyl acrylate determined by ¹H NMR was 15 wt%. The product had two T_{g}s, one at 37 °C and another one at 78°C, determined by DMTA, a molecular weight of Mn = 94.400, Mw = 187.900 and a polydispersity of 2.0 determined by GPC.

The obtained product had a density of 1.31 g/cm³, a Shore hardness A of 97, a tensile strength of 373 kgf/cm², and an elongation at break of 163%.

### EXAMPLE 6

In the same reactor of 7.5 litre capacity described in previous examples, 3319 mL of deionized water, 123 g a 6.02 wt% solution in deionized water of a polyvinyl alcohol with a hydrolysis degree of 80%, 0.344 g of sodium bicarbonate and 279 g of butyl acrylate and 93 g of ethylhexyl acrylate were loaded.

Once the reactor was closed and the stirrer was connected at 150 rpm, vacuum was applied till removing the oxygen present in the reaction medium. Then the stirring was increased until 300 rpm and the reaction mixture was heated, and when a temperature of 42 °C was reached, 2.17 g of a 60 wt% emulsion of di-(2-ethyl-hexyl) peroxydicarbonate were loaded in the reactor.

The reaction was kept under these conditions until a 30 % of conversion was achieved. At this moment 1485 g of vinyl chloride monomer were loaded, the reaction medium was heated until reaching a temperature of 60.5 °C, which was kept during the rest of the reaction.

The reaction was terminated when a reactor pressure drop to a value of 0.5 bar and the un-reacted vinyl chloride was removed by depressurizing the reactor. Then, the obtained suspension was separated by filtration, washed three times with deionized water, and dried with air on a fluidized bed dryer obtaining a conversion of 75%.

The obtained product had a density of 1.27 g/cm³, a Shore hardness A of 97, a tensile strength of 359 kgf/cm², and an elongation at break of 233%.

### EXAMPLE 7

In the same reactor of 7.5 litre capacity described in previous examples, 3675 mL of deionized water, 125 g a 5.97 wt% solution in deionized water of a polyvinyl alcohol with a hydrolysis degree of 72.5%, 0.385 g of sodium bicarbonate and 578 g of butyl acrylate were loaded.

Once the reactor was closed and the stirrer was connected at 150 rpm, vacuum was applied till removing the oxygen present in the reaction medium.

Then, the stirring was increases until 300 rpm, 38 g of vinyl chloride monomer were injected into the reactor and the reaction mixture was heated until 70°C. When this temperature was achieved a continuous feeding of 0.047 L a 0.88 wt% emulsion of diisobutyryl peroxide were dosed until a 65 % of conversion was reached.

At this moment 1463 g of vinyl chloride monomer were loaded, the reaction medium was maintained at the same temperature and stirring and 0.266 L a 0.88 wt% emulsion of diisobutyryl peroxide were fed during 108 minutes.

The reaction was terminated when a reactor pressure drop to a value of 5.0 bars and the un-reacted vinyl chloride was removed by depressurizing the reactor. Then, the obtained suspension was separated by filtration, washed three times with deionized water, and dried with air on a fluidized bed dryer obtaining a conversion of 79%.

The apparent density was 0.491 g/cm³ the average particle size was 287 microns and the residual acrylate content determined by ¹H NMR was 260 ppm.

The content of polybutylacrylate determined by ¹H NMR was 33 wt%. The product had two T_{g}s determined by DMTA one at 10°C and the other one at 79 °C, a molecular weight of Mn = 46.700, Mw = 92.200 and a polydispersity of 2.0 determined by GPC.

The product had a density of 1.24 g/cm³, a Shore hardness A/D of 73/25, a tensile strength of 100 kgf/cm² and an elongation at break of 188%.

### EXAMPLE 8

In the same reactor of 7.5 litre capacity described in previous examples, 3675 mL of deionized water, 125 g a 5.97 wt% solution in deionized water of a polyvinyl alcohol with a hydrolysis degree of 72.5%, 0.385 g of sodium bicarbonate and 405 g of butyl acrylate were loaded.

Once the reactor was closed and the stirrer was connected at 150 rpm, vacuum was applied till removing the oxygen present in the reaction medium.

Then, the stirring was increases until 300 rpm, 38 g of vinyl chloride monomer were injected into the reactor and the reaction mixture was heated until 70°C. When this temperature was achieved a continuous feeding of 0.032 L a 0.88 %wt emulsion of diisobutyryl peroxide were dosed until a 67 % of conversion was reached.

At this moment 1463 g of vinyl chloride monomer were loaded, the reaction medium was maintained at the same temperature and stirring and 0.333 L a 0.88 %wt emulsion of diisobutyryl peroxide were fed during 125 minutes.

The reaction was terminated when a reactor pressure drop to a value of 4.8 bars and the un-reacted vinyl chloride was removed by depressurizing the reactor. Then, the obtained suspension was separated by filtration, washed three times with deionized water, and dried with air on a fluidized bed dryer obtaining a conversion of 79%).

The apparent density was 0.593 g/cm³ the average particle size was 339 microns and the residual acrylate content determined by ¹H NMR was 100 ppm.

The content of polybutylacrylate determined by ¹H NMR was 25 wt%. The product had two T_{g}s determined by DMTA one at 11°C and the other one at 57 °C, a molecular weight of Mn = 55.500, Mw = 106.600 and a polydispersity of 1.9 determined by GPC.

The product had a density of 1.25 g/cm³, a Shore hardness A/D of 95/57, a tensile strength of 230 kgf/cm² and an elongation at break of 258%.

### COMPARATIVE EXAMPLE 6 - Homogeneity

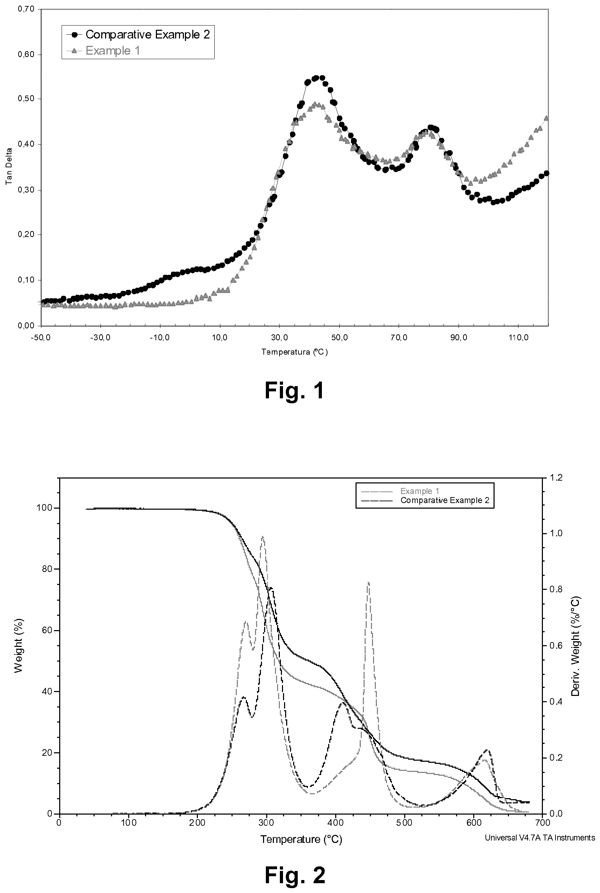

DMTA carried out on polymers obtained in Comparative Example 2 and in Example 1 shows that the polymer of Comparative Example 2 has an additional T_{g} appearing at a temperature between -10 and 10 °C (see Fig. 1), corresponding to the presence of PBA rich chains, namely moieties of PBA with a mobility enough to give rise to an additional T_{g} under 10°C. The presence of these homopolymer chains increases the stickiness of the final polymer, while making it more difficult to handle and to dry. At the same time the additional T_{g} limits the temperatures at which the polymer can be used for.

It can be seen that the polymer of Example 1 is deprived of the mentioned PBA rich chains.

### COMPARATIVE EXAMPLE 7 - Thermal stability

TGA analysis carried out on product of Example 1 and Comparative Example 2 shows that the second stage of the degradation process appears earlier in the polymer of Comparative Example 2 (at about 350 °C) than in the polymer of Example 1 (at about 400 °C) (see Fig. 2).

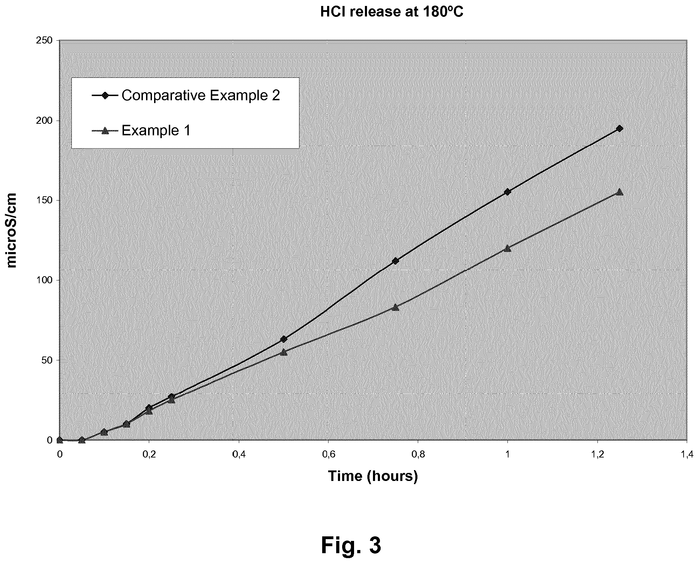

Measurements on the amount of HCI released at 180°C by polymers of Example 1 and of Comparative Example 2 due to the thermal degradation of PVC show that once the release of HCI is started, the rate of degradation is lower in the polymer of the invention (see Fig. 3).

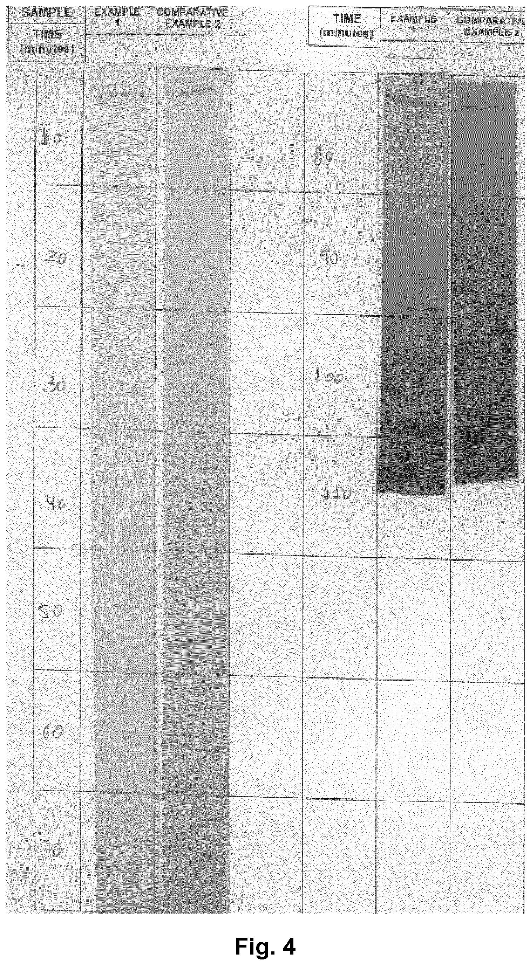

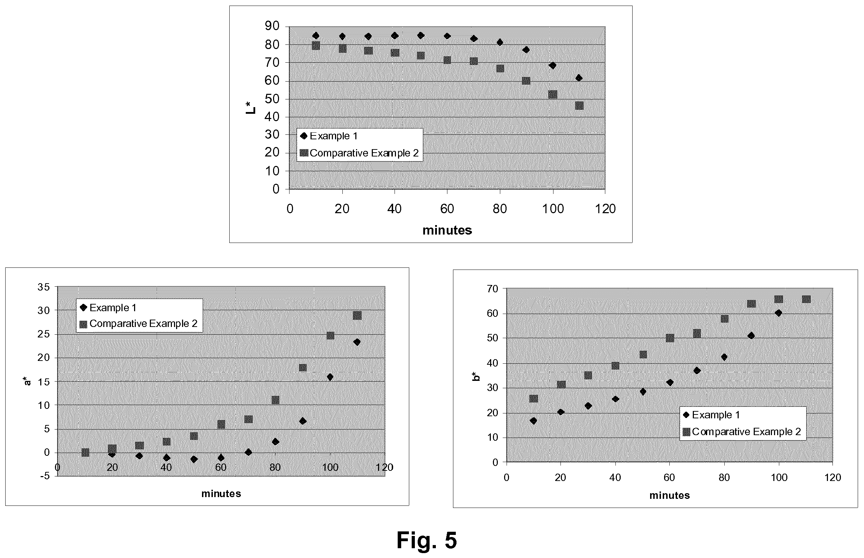

Additionally, after performing a thermal static stability assays in a stove at 180 °C, the polymer of Comparative Example 2 became more coloured than the Example 1 of the invention (Fig. 4). This is further supported by the results in Fig. 5 where it can be seen that the polymer obtained in Example 1 is lighter and less reddish and yellowish than the polymer obtained in Comparative example 2. The higher colouring either limits the applicability of the polymer or involves the need to use additional dosage of additives in order to compensate this visual effect.

The above-mentioned assays demonstrate the higher thermal stability of the polymer of the invention.

## Claims

1. A process for the preparation of a polymer from at least one monomer A which is a vinyl halide monomer and at least one monomer B by free radical polymerization in aqueous medium, wherein the monomer B is a monomer whose polymer has a T_{g} lower than that of the polymer produced by polymerizing the at least one vinyl halide monomer, and the ratio of the at least one vinyl halide monomer A to the at least another monomer B in wt% in the polymer is from 99.7/0.3 to 40/60, the process comprising the following steps:
a) mixing water, at least one amphiphilic substance, from 10 to 100 wt% of the total amount of the at least one monomer B, optionally a buffer, and optionally from 0.1 to 10 wt % of the at least one monomer A with respect to the at least one monomer B in step a), at an appropriate temperature to carry out the polymerization of monomer B,
and adding a thermal or a redox initiator in order to start polymerization and allowing the system to react until reaching a conversion from 10 to 80 mol% of monomer B,
b) adding from 20 to 100 wt% of the remaining amount of monomer A to be added, optionally, an additional amount of the amphiphilic substance, optionally, an additional amount of the initiator, optionally, a buffer; and the remaining amount of the at least one monomer B, allowing the mixture to react until the conversion of the monomers reaches a value higher than 20 wt%,
c) adding the remaining amount of the at least one monomer A, optionally, an additional amount of the amphiphilic substance, optionally, an additional amount of the initiator, and optionally an additional amount of the buffer, allowing the system to react until reaching a conversion higher than 70%.

2. The process according to claim 1, wherein the conversion in step a) is from 30 to 60 mol% of monomer B.

3. The process according to any one of claims 1 to 2, wherein the monomer B is selected from the group consisting of acrylates, vinyl benzoate, isobutylene, dialkyl maleate, dialkyl fumarate, and vinyl acetate.

4. The process according to any one of claims 1 to 2, wherein the monomer B is an acrylate.

5. The process according to any one of claims 1 to 4, wherein the ratio of the at least one vinyl halide monomer A to the at least another monomer B in wt% in the final product is from 99.7/0.3 to 85/15.

6. The process according to any one of claims 1 to 4, wherein the ratio of the at least one vinyl halide monomer A to the at least another monomer B in wt% is from 97/3 to 90/10.

7. The process according to any one of claims 1 to 4, wherein the ratio of the at least one vinyl halide monomer A to the at least another monomer B in wt% in the final product is from 90/10 to 75/25.

8. The process according to any one of claims 1 to 4, wherein the ratio of the at least one vinyl halide monomer A to the at least another monomer B in wt% in the final product is from 75/25 to 40/60.

9. The process according to any one of claims 1 to 8, wherein the amount of monomer A added in step b) is 100 wt% of the remaining amount of monomer A to be added.

10. The process according to any one of claims 1 to 9, wherein monomer A in step b) is added in one or more injections.

11. The process according to any one of claims 1-10, wherein in step a) the polymerization temperature is from 20 to 120 °C.

12. The process according to any one of claims 1-11, wherein the polymerization is carried out in aqueous suspension.

13. The process according to any one of claims 1-12, wherein the monomer A comprises from 50% to 100% of vinyl chloride.

14. A polymer obtainable by the process of any one of claims 1-13.

15. An article of manufacture made of a polymer of claim 14.

## Patentansprüche

1. Ein Verfahren zur Herstellung eines Polymers aus mindestens einem Monomer A, das ein Vinylhalogenidmonomer ist und mindestens einem Monomer B durch radikalische Polymerisation in wässrigem Medium, wobei das Monomer B ein Monomer ist, dessen Polymer eine niedrigere T_{g} als das durch Polymerisieren des mindestens einen Vinylhalogenidmonomers hergestellte Polymer aufweist und das Verhältnis des mindestens einen Vinylhalogenidmonomers A zu dem mindestens anderen Monomer B in Gew.-% in dem Polymer von 99,7/0,3 bis 40/60 beträgt, wobei das Verfahren die folgenden Schritte umfasst:
a) Anmischen von Wasser, mindestens einer amphiphilen Substanz, von 10 bis 100 Gew.-% der Gesamtmenge des mindestens einen Monomers B, wahlweise eines Puffers, und wahlweise von 0,1 bis 10 Gew.-% des mindestens einen Monomers A in Bezug auf das mindestens eine Monomer B in Schritt a), bei einer geeigneten Temperatur, um die Polymerisation von Monomer B durchzuführen,
und Zugabe eines thermischen oder eines Redox-Initiators, um die Polymerisation zu starten und das System reagieren zu lassen, bis ein Umsatz von 10 bis 80 Mol-% des Monomers B erreicht worden ist,
b) Zugabe von 20 bis 100 Gew.-% der verbleibenden Menge des zuzugebenden Monomers A, wahlweise einer zusätzlichen Menge der amphiphilen Substanz, wahlweise einer zusätzlichen Menge des Initiators, wahlweise eines Puffers; und der verbleibenden Menge des mindestens einen Monomers B, Reagierenlassen der Mischung, bis der Umsatz der Monomere einen Wert von mehr als 20 Gew.-% erreicht hat,
c) Zugeben der verbleibenden Menge des mindestens einen Monomers A, wahlweise einer zusätzlichen Menge der amphiphilen Substanz, wahlweise einer zusätzlichen Menge des Initiators und wahlweise einer zusätzlichen Menge des Puffers, Reagierenlassen des Systems, bis ein Umsatz von mehr als 70 % erreicht worden ist.

2. Das Verfahren nach Anspruch 1, wobei der Umsatz in Schritt a) von 30 bis 60 Mol-% des Monomers B beträgt.

3. Das Verfahren nach einem der Ansprüche 1 bis 2, wobei das Monomer B ausgewählt ist aus der Gruppe bestehend aus Acrylaten, Vinylbenzoat, Isobutylen, Dialkylmaleat, Dialkylfumarat und Vinylacetat.

4. Das Verfahren nach einem der Ansprüche 1 bis 2, wobei das Monomer B ein Acrylat ist.

5. Das Verfahren nach einem der Ansprüche 1 bis 4, wobei das Verhältnis des mindestens einen Vinylhalogenidmonomers A zu dem mindestens anderen Monomer B in Gew.-% im Endprodukt von 99,7/0,3 bis 85/15 beträgt.

6. Das Verfahren nach einem der Ansprüche 1 bis 4, wobei das Verhältnis des mindestens einen Vinylhalogenidmonomers A zu dem mindestens anderen Monomer B in Gew.-% von 97/3 bis 90/10 beträgt.

7. Das Verfahren nach einem der Ansprüche 1 bis 4, wobei das Verhältnis des mindestens einen Vinylhalogenidmonomers A zu dem mindestens anderen Monomer B in Gew.-% im Endprodukt von 90/10 bis 75/25 beträgt.

8. Das Verfahren nach einem der Ansprüche 1 bis 4, wobei das Verhältnis des mindestens einen Vinylhalogenidmonomers A zu dem mindestens anderen Monomer B in Gew.-% im Endprodukt von 75/25 bis 40/60 beträgt.

9. Das Verfahren nach einem der Ansprüche 1 bis 8, wobei die in Schritt b) zugegebene Menge an Monomer A 100 Gew.-% der restlichen zuzugebenden Menge an Monomer A beträgt.

10. Das Verfahren nach einem der Ansprüche 1 bis 9, wobei das Monomer A in Schritt b) in einer oder mehreren Injektionen zugegeben wird.

11. Das Verfahren nach einem der Ansprüche 1 bis 10, wobei in Schritt a) die Polymerisationstemperatur von 20 bis 120°C beträgt.

12. Das Verfahren nach einem der Ansprüche 1-11, wobei die Polymerisierung in einer wässrigen Suspension durchgeführt wird.

13. Das Verfahren nach einem der Ansprüche 1 bis 12, wobei das Monomer A von 50 bis 100 % Vinylchlorid umfasst.

14. Ein Polymer, das durch das Verfahren nach einem der Ansprüche 1 bis 13 erhalten werden kann.

15. Ein Erzeugnis aus einem Polymer des Anspruchs 14.

## Revendications

1. Un procédé de préparation d'un polymère à partir d'au moins un monomère A qui est un monomère d'halogénure de vinyle et d'au moins un monomère B par polymérisation radicalaire en milieu aqueux, dans lequel le monomère B est un monomère dont le polymère a une T_{g} inférieure à celle du polymère produit en polymérisant l'au moins un monomère halogénure de vinyle, et le rapport de l'au moins un monomère halogénure de vinyle A à l'au moins un autre monomère B en % en poids dans le polymère est de 99,7/0,3 à 40/60, le procédé comprenant les étapes suivantes :
a) mélanger de l'eau, au moins une substance amphiphile, de 10 à 100 % en poids de la quantité totale de l'au moins un monomère B, facultativement un tampon, et facultativement de 0,1 à 10 % en poids d'au moins un monomère A par rapport à l'au moins un monomère B à l'étape a), à une température appropriée pour effectuer la polymérisation du monomère B,
et en ajoutant un amorceur thermique ou redox afin de démarrer la polymérisation et en laissant le système réagir jusqu'à atteindre un taux de conversion de 10 à 80 % en mole de monomère B,
b) ajouter de 20 à 100 % en poids de la quantité restante de monomère A à ajouter, facultativement, une quantité supplémentaire de la substance amphiphile, facultativement, une quantité supplémentaire de l'amorceur, facultativement, un amortisseur ; et la quantité restante de l'au moins un monomère B, en laissant le mélange réagir jusqu'à ce que le taux de conversion des monomères atteigne une valeur supérieure à 20 % en poids,
c) ajouter la quantité restante de l'au moins un monomère A, facultativement, une quantité supplémentaire de la substance amphiphile, facultativement, une quantité supplémentaire de l'amorceur, et facultativement une quantité supplémentaire de l'amortisseur, laissant le système réagir jusqu'à atteindre un taux de conversion supérieure à 70 %.

2. Le procédé selon la revendication 1, dans lequel le taux de conversion à l'étape a) est de 30 à 60 % en moles de monomère B.

3. Le procédé selon l'une quelconque des revendications 1 à 2, dans lequel le monomère B est choisi dans le groupe constitué des acrylates, du benzoate de vinyle, de l'isobutylène, du maléate de dialkyle, du fumarate de dialkyle et de l'acétate de vinyle.

4. Le procédé selon l'une quelconque des revendications 1 à 2, dans lequel le monomère B est un acrylate.

5. Le procédé selon l'une quelconque des revendications 1 à 4, dans lequel le rapport de l'au moins un monomère halogénure de vinyle A à l'au moins un autre monomère B en % en poids dans le produit final est de 99,7/0,3 à 85/15.

6. Le procédé selon l'une quelconque des revendications 1 à 4, dans lequel le rapport de l'au moins un monomère halogénure de vinyle A à l'au moins un autre monomère B en % en poids est de 97/3 à 90/10.

7. Le procédé selon l'une quelconque des revendications 1 à 4, dans lequel le rapport de l'au moins un monomère halogénure de vinyle A à l'au moins un autre monomère B en % en poids dans le produit final est de 90/10 à 75/25.

8. Le procédé selon l'une quelconque des revendications 1 à 4, dans lequel le rapport de l'au moins un monomère halogénure de vinyle A à l'au moins un autre monomère B en % en poids dans le produit final est de 75/25 à 40/60.

9. Le procédé selon l'une quelconque des revendications 1 à 8, dans lequel la quantité de monomère A ajoutée à l'étape b) est de 100 % en poids de la quantité restante de monomère A à ajouter.

10. Le procédé selon l'une quelconque des revendications 1 à 9, dans lequel le monomère A dans l'étape b) est ajouté en une ou plusieurs injections.

11. Le procédé selon l'une quelconque des revendications 1 à 10, dans lequel à l'étape a) la température de polymérisation est de 20 à 120 °C.

12. Le procédé selon l'une quelconque des revendications 1-11, dans lequel la polymérisation est effectuée en suspension aqueuse.

13. Le procédé selon l'une quelconque des revendications 1 à 12, dans lequel le monomère A comprend de 50 % à 100 % de chlorure de vinyle.

14. Un polymère pouvant être obtenu par le procédé de l'une quelconque des revendications 1 à 13.

15. Un produit de manufacture réalisé en un polymère de la revendication 14.
